# EUROPÄISCHE PATENTSCHRIFT

(11) **EP 2 586 283 B1**
(45) Veröffentlichungstag und Bekanntmachung des Hinweises auf die Patenterteilung: **26.07.2017**
(21) Anmeldenummer: 12183852.8
(22) Anmeldetag: 11.09.2012
(51) Int. Cl.: A01D 34/00

(54) **Autonomes Arbeitsgerät**
Autonomous work device
Outil de travail autonome

(30) Priorität: 31.10.2011 DE 102011085488
(43) Veröffentlichungstag der Anmeldung: 01.05.2013
(73) Patentinhaber: Robert Bosch GmbH, 70442 Stuttgart (DE)
(72) Erfinder: Biber, Peter, 72119 Poltringen (DE); Petereit, Steffen, 71691 Freiberg A. N. (DE); Koch, Christoph, 70178 Stuttgart (DE); Albert, Amos, 71229 Leonberg (DE)

(56) Entgegenhaltungen:
- US-A1- 2002 156 556
- US-A1- 2010 324 731

## Beschreibung

### Stand der Technik

Es ist bereits ein autonomes Arbeitsgerät, insbesondere ein autonomer Rasenmäher, mit einem Antriebsmotor und zumindest einem Antriebsrad vorgeschlagen worden.

Das Dokument US 2002/0156556 A1 offenbart ein autonomes Arbeitsgerät nach dem Oberbegriff des Anspruchs 1.

### Offenbarung der Erfindung

Die Erfindung geht aus von einem autonomen Arbeitsgerät, insbesondere einem autonomen Rasenmäher, mit zumindest zwei Antriebsmotoren und zumindest zwei Antriebsrädern. Es wird vorgeschlagen, dass das autonome Arbeitsgerät eine Auswerteeinheit aufweist, die dazu vorgesehen ist, zumindest eine Kenngröße eines Schlupfs des zumindest einen Antriebsrads bei einer Auswertung zu berücksichtigen. Unter einem "autonomen Arbeitsgerät" soll in diesem Zusammenhang insbesondere ein Gerät verstanden werden, welches eine Arbeit zumindest teilweise selbsttätig verrichtet, wie insbesondere selbsttätig beginnt, selbsttätig beendet und/oder selbsttätig zumindest einen Parameter, wie insbesondere einen Streckenparameter, und/oder einen Umkehrpunkt usw. auswählt. Besonders bevorzugt ist das Gerät dazu vorgesehen, eine Fläche abzufahren und insbesondere die Fläche zu bearbeiten, wie beispielsweise zu kehren, abzusaugen, zu reinigen und/oder einen auf der Fläche befindlichen Rasen zu mähen. Dabei sind verschiedene, dem Fachmann als sinnvoll erscheinende autonome Arbeitsgeräte denkbar, wie beispielsweise eine autonome Kehrmaschine, ein autonomer Staubsauger oder eine autonome Schwimmbadreinigungsmaschine usw. Insbesondere ist das autonome Arbeitsgerät jedoch von einem autonomen Rasenmäher gebildet. Ferner soll in diesem Zusammenhang unter einem "Antriebsmotor" insbesondere eine elektrische und/oder mechanische und/oder pneumatische Motoreinheit verstanden werden, die in einem Betrieb vorteilhaft zur Erzeugung einer Drehbewegung vorgesehen ist. Vorteilhaft soll darunter insbesondere ein Elektromotor verstanden werden. Des Weiteren soll in diesem Zusammenhang unter einem "Antriebsrad" insbesondere ein Rad verstanden werden, welches zumindest teilweise direkt oder indirekt kraftschlüssig mit einer Antriebseinheit, vorzugsweise einem Antriebsmotor, verbunden ist. Unter einer "Auswerteeinheit" soll in diesem Zusammenhang insbesondere eine Einheit mit einem Informationseingang, einer Informationsverarbeitung und einer Informationsausgabe verstanden werden. Vorteilhaft weist die Auswerteeinheit zumindest einen Prozessor, einen Speicher, ein Betriebsprogramm, Regelroutinen, Steuerroutinen und/oder Berechnungsroutinen auf. Besonders bevorzugt ist der Informationsausgang mit einem Sensorelement verbunden oder ist von einem Sensorelement gebildet. Besonders bevorzugt weist die Auswerteeinheit zumindest eine Steuereinheit und/oder insbesondere zumindest eine Regeleinheit auf. Ferner soll in diesem Zusammenhang unter einem "Schlupf" insbesondere ein Verhältnis einer Umfangsgeschwindigkeit eines Antriebsrads zu einer tatsächlichen Fortbewegungsgeschwindigkeit verstanden werden. Sind die Fortbewegungsgeschwindigkeit und eine Umfangsgeschwindigkeit des Antriebsrads identisch, beträgt der Schlupf 0%. Vorteilhaft soll dabei insbesondere zwischen einem Antriebsschlupf und einem Bremsschlupf unterschieden werden. Ein Antriebsschlupf beträgt 100%, wenn eine Umfangsgeschwindigkeit des Antriebsrads größer null und eine Fortbewegungsgeschwindigkeit null ist. Ein Bremsschlupf beträgt 100%, wenn eine Umfangsgeschwindigkeit des Antriebsrads null und eine Fortbewegungsgeschwindigkeit größer null ist.

Durch die erfindungsgemäße Ausgestaltung des autonomen Arbeitsgeräts kann vorteilhaft ein Schlupfverhalten berücksichtigt werden. Ferner kann ein vorteilhafter Vortrieb erreicht werden.

Ferner wird vorgeschlagen, dass die Auswerteeinheit dazu vorgesehen ist, ein Drehmoment und/oder eine Drehzahl des zumindest einen Antriebsmotors zumindest teilweise abhängig von der zumindest einen Kenngröße des Schlupfs zu steuern und/oder zu regulieren. Eine Steuerung und/oder eine Regulierung des Antriebsmotors kann dabei insbesondere über eine Steuerung und/oder eine Regulierung der zugeführten Leistung des Antriebsmotors erfolgen. Dabei soll in diesem Zusammenhang unter einem "Drehmoment" insbesondere ein Antriebsmoment und/oder ein Bremsmoment verstanden werden. Dadurch kann vorteilhaft ein Antriebsdrehmoment und/oder eine Antriebsdrehzahl des Antriebsmotors an verschiedene Gegebenheiten und/oder Bedürfnisse und/oder besonders vorteilhaft an zumindest eine Kenngröße eines Schlupfs angepasst werden.

Es wird ferner vorgeschlagen, dass die Auswerteeinheit dazu vorgesehen ist, bei einem erhöhten Schlupf einen Betrag, d.h. die positive Differenz zu null, des Drehmoments des zumindest einen Antriebsmotors zu reduzieren. Vorzugsweise wird der Betrag des Drehmoments durch die Auswerteeinheit gegenüber einem zum Zeitpunkt einer Erfassung des erhöhten Schlupfs vorliegenden Betrag des Drehmoments um mehr als 0%, vorzugsweise um zumindest 15% und besonders bevorzugt um zumindest 30% reduziert. Insbesondere wird der Betrag des Drehmoments um maximal 100% reduziert. Unter einem "erhöhten Schlupf" soll in diesem Zusammenhang insbesondere ein Schlupf von zumindest 10%, vorzugsweise von zumindest 20%, besonders bevorzugt von zumindest 30% verstanden werden. Vorzugsweise ist der Schlupf von einem Antriebsschlupf und/oder einem Bremsschlupf gebildet. Zudem oder alternativ wäre denkbar, dass die Auswerteeinheit dazu vorgesehen ist, bei einem erhöhten Schlupf einen Betrag einer Geschwindigkeit des Arbeitsgeräts und/oder einer Drehzahl des Antriebsmotors zu reduzieren. Dabei soll in diesem Zusammenhang unter "zumindest gegen null" insbesondere verstanden werden, dass ein Wert gegenüber einem Ausgangswert zumindest null angenähert bzw. eine Differenz zwischen dem Wert und null gegenüber einer Differenz zwischen dem Ausgangswert und null reduziert wird. Vorzugweise kann eine Differenz auf null reduziert werden. Besonders vorteilhaft entspricht ein Vorzeichen des Ausgangswerts einem Vorzeichen des Werts oder der Wert beträgt null. Dadurch können vorteilhaft Schäden auf der zu bearbeitenden Fläche gering gehalten werden. Ferner kann eine effiziente Antriebs- und/oder Bremswirkung erreicht werden.

Zudem oder alternativ wäre denkbar, dass bei einem erhöhten Schlupf zumindest ein variabler Parameter des autonomen Arbeitsgeräts reguliert wird. Unter einem "variablen Parameter" soll in diesem Zusammenhang insbesondere ein Wert und/oder eine Eigenschaft verstanden werden, welche sich während eines Betriebs und/oder zwischen verschiedenen Betrieben verändert. Vorzugsweise ist der Parameter einstellbar. Es sind verschiedene, dem Fachmann als sinnvoll erscheinende Parameter denkbar. Insbesondere soll darunter jedoch eine Gewichtsverteilung und/odervorzugsweise ein Lenkwinkel verstanden werden. Dabei kann beispielsweise bei einem erhöhten Schlupf sowie einem großen Lenkwinkel der Lenkwinkel reduziert werden, bis der Schlupf unter einen vorgegebenen Wert fällt oder der Lenkwinkel 0° beträgt. Dadurch können vorteilhaft verschiedene Parameter des autonomen Arbeitsgeräts berücksichtigt und reguliert werden.

Ferner wäre denkbar, dass die Auswerteeinheit dazu vorgesehen ist, einen Schlupf des Antriebsrads durch Steuerung und/oder Regulierung eines Antriebsdrehmoments und/oder einer Antriebsdrehzahl des Antriebsmotors zumindest annähernd auf einem Wert zu halten. Dabei soll unter "zumindest annähernd" in diesem Zusammenhang insbesondere eine Abweichung von maximal 15%, vorzugsweise von maximal 10% und besonders bevorzugt von maximal 5% verstanden werden. Vorteilhaft wäre denkbar, dass die Auswerteeinheit dazu vorgesehen ist, einen Schlupf des Antriebsrads durch Steuerung und/oder Regulierung eines Antriebsdrehmoments und/oder einer Antriebsdrehzahl des Antriebsmotors zumindest annähernd auf einem Wert eines zumindest im Wesentlichen maximalen Kraftschlussbeiwerts zu halten. Der Wert des Schlupfs mit einem zumindest im Wesentlichen maximalen Kraftschlussbeiwert ist dabei insbesondere abhängig von einer Untergrundbeschaffenheit. Dabei soll unter "zumindest im Wesentlichen" insbesondere eine Abweichung von maximal 30%, vorzugsweise von maximal 20%, besonders bevorzugt von maximal 10% verstanden werden. Eine Untergrundbeschaffenheit könnte beispielsweise über eine Sensorik sensiert und/oder über eine Eingabeeinheit eingegeben werden. Dadurch kann vorteilhaft ein hoher Kraftschlussbeiwert der Antriebsräder gewährleistet werden.

Es wird ferner vorgeschlagen, dass das autonome Arbeitsgerät zumindest eine Sensoreinheit aufweist, welche dazu vorgesehen ist, eine Kenngröße eines Schlupfs zu detektieren. Unter einer "Sensoreinheit" soll in diesem Zusammenhang insbesondere eine Einheit verstanden werden, die dazu vorgesehen ist, zumindest eine Kenngröße und/oder eine physikalische Eigenschaft aufzunehmen, wobei die Aufnahme aktiv, wie insbesondere durch Erzeugen und Aussenden eines elektrischen Messsignals, und/oder passiv, wie insbesondere durch eine Erfassung von Eigenschaftsänderungen eines Sensorbauteils, stattfinden kann. Es sind verschiedene, dem Fachmann als sinnvoll erscheinende Sensoreinheiten denkbar. Dadurch kann vorteilhaft genau und einfach eine Kenngröße eines Schlupfs detektiert werden.

Des Weiteren wird vorgeschlagen, dass das autonome Arbeitsgerät zumindest zwei Sensoreinheiten aufweist. Dadurch kann besonders genau und effektiv zumindest eine Kenngröße eines Schlupfs detektiert werden.

Es wird weiter vorgeschlagen, dass zumindest eine der zumindest zwei Sensoreinheiten von einem Drehzahlsensor gebildet ist. Unter einem "Drehzahlsensor" soll in diesem Zusammenhang insbesondere ein Sensor verstanden werden, welcher eine Zahl von Umdrehungen misst. Vorzugsweise ist der Drehzahlsensor von einem optischen und/oder besonders vorteilhaft von einem magnetischen Sensor gebildet. Besonders bevorzugt ist der Drehzahlsensor von einem odometrischen Drehzahlsensor gebildet. Dabei soll unter einem "optischen Sensor" insbesondere ein Sensor verstanden werden, der über zumindest eine optische Markierung und/oder eine optische Linse eine Anzahl von Umdrehungen misst. Ferner soll in diesem Zusammenhang unter einem "magnetischen Sensor" insbesondere ein Sensor verstanden werden, der über zumindest ein Sensorelement, vorzugsweise über zumindest ein Hall-Sensorelement, eine Änderung einer Magnetfeldrichtung zumindest eines Magnetelements, vorzugsweise eines Magnetpolrads detektiert und daraus eine Drehzahl ableitet. Dadurch kann besonders vorteilhaft und kostengünstig ein Sensor realisiert werden, welcher eine Kenngröße eines Schlupfs detektiert.

Ferner wird vorgeschlagen, dass zumindest eine der zumindest zwei Sensoreinheiten von einem Drehmomentsensor gebildet ist. Unter einem "Drehmomentsensor" soll in diesem Zusammenhang insbesondere ein Sensor verstanden werden, der zumindest eine Kenngröße zumindest eines Drehmoments detektiert und vorzugsweise über die zumindest eine Kenngröße des zumindest einen Drehmoments zumindest ein Drehmoment berechnet. Es sind verschiedene, dem Fachmann als sinnvoll erscheinende Sensoren denkbar, insbesondere soll darunter jedoch ein Motorsensor verstanden werden, der zumindest einen Motorstrom und/oder eine Motorspannung zumindest eines Antriebsmotors überwacht und daraus und/oder mit zumindest einer Kenngröße einer weiteren Sensoreinheit zumindest ein Drehmoment ableitet. Dadurch kann besonders genau und günstig eine Sensoreinheit bereitgestellt werden, welche vorteilhaft zumindest eine Kenngröße eines Schlupfs detektiert.

Zudem oder alternativ wäre denkbar, dass zumindest eine der zumindest zwei Sensoreinheiten von einem Giergeschwindigkeitssensor, von einem Querbeschleunigungssensor, von einem Satelliten-Sensor, insbesondere einem GPS-Sensor, von einem optischen Sensor und/oder von einem Radarsensor gebildet ist. Vorzugsweise wäre insbesondere denkbar, dass der Giergeschwindigkeits- und/oder der Querbeschleunigungssensor dazu vorgesehen ist bzw. sind, als Inertialsensor bzw. Inertialsensoren eine Bewegung des autonomen Arbeitsgeräts zu messen, wobei die Auswerteeinheit dazu vorgesehen ist, die gemessene Bewegung mit einer gemessenen Bewegung des Drehzahlsensors zu vergleichen und daraus einen Schlupf zu ermitteln. Besonders bevorzugt wäre denkbar, dass die Auswerteeinheit dazu vorgesehen ist, bei einem erhöhten Schlupf über einen Drehmomentsensor ein Antriebsrad mit dem erhöhten Schlupf zu erfassen. Ferner wäre vorzugsweise denkbar, dass Satelliten-Sensoren, insbesondere GPS-Sensoren, optische Sensoren und/oder Radarsensoren dazu vorgesehen sind, eine wahre Geschwindigkeit des autonomen Arbeitsgeräts zu detektieren, wobei die Auswerteeinheit dazu vorgesehen ist, Messgrößen von Sensoren zu fusionieren, um ein besonders genaues Messergebnis zu erhalten. Dadurch kann zumindest eine Sensoreinheit bereitgestellt werden, welche vorteilhaft zumindest eine Kenngröße eines Schlupf detektiert.

### Zeichnung

Weitere Vorteile ergeben sich aus der folgenden Zeichnungsbeschreibung. In den Zeichnungen ist ein Ausführungsbeispiel der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: ein erfindungsgemäßes autonomes Arbeitsgerät in einer schematischen Darstellung und
- Fig. 2: ein Blockdiagramm eines Antriebs des erfindungsgemäßen autonomen Arbeitsgeräts in einer schematischen Darstellung.

### Beschreibung des Ausführungsbeispiels

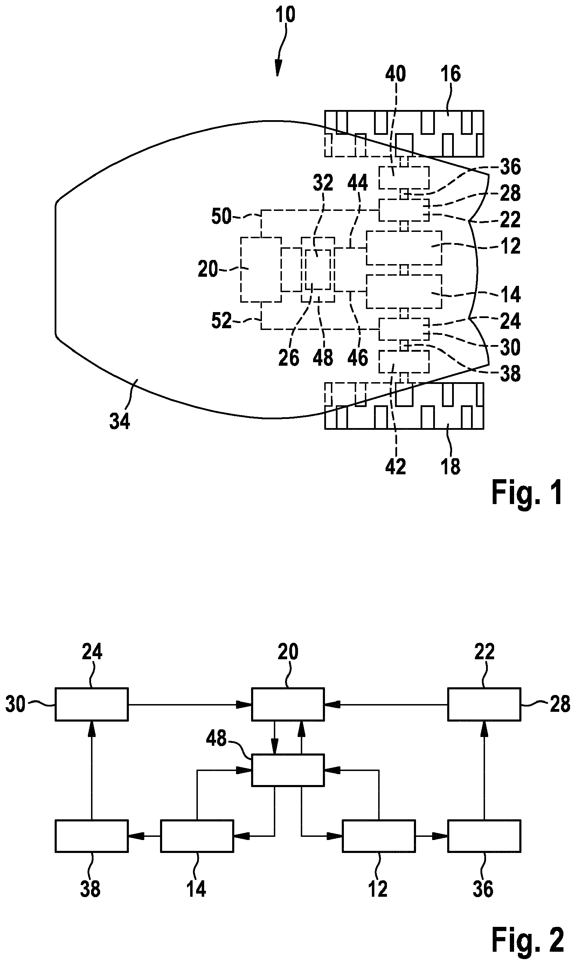

Figur 1 zeigt ein erfindungsgemäßes autonomes Arbeitsgerät 10. Das autonome Arbeitsgerät 10 ist von einem autonomen Rasenmäher gebildet. Das autonome Arbeitsgerät 10 weist zwei Antriebsmotoren 12, 14 und zwei Antriebsräder 16, 18 auf. Die Antriebsmotoren 12, 14 sind von Elektromotoren gebildet. Die Antriebsmotoren 12, 14 sind innerhalb eines Gehäuses 34 des autonomen Arbeitsgeräts 10 angeordnet und sind jeweils über eine Welle 36, 38 mit einem der Antriebsräder 16, 18 verbunden. Die Wellen 36, 38 sind jeweils zweigeteilt, wobei zwischen den Wellen 36, 38 jeweils ein Getriebe 40, 42 angeordnet ist. Die Antriebsräder 16, 18 sind an gegenüberliegenden Seiten des Gehäuses 34 des autonomen Arbeitsgeräts 10 angeordnet. Über ein getrenntes Ansteuern der Antriebsmotoren 12, 14 kann das autonome Arbeitsgerät 10 gesteuert werden.

Ferner weist das autonome Arbeitsgerät 10 eine Auswerteeinheit 20 auf, die dazu vorgesehen ist, eine Kenngröße eines Schlupfs der Antriebsräder 16, 18 bei einer Auswertung zu berücksichtigen. Die Auswerteeinheit 20 ist dazu vorgesehen, eine Veränderung der Drehzahlen und/oder des Drehmoments der Antriebsräder 16, 18 bei einer Auswertung zu berücksichtigen. Die Drehzahlen und Drehmomente der Antriebsräder 16, 18 werden getrennt voneinander berücksichtigt. Über die Drehzahlen und/oder die Drehmomente wird von der Auswerteeinheit 20 ein Schlupf der einzelnen Antriebsräder 16, 18 und/oder der zwei Antriebsräder 16, 18 berechnet und ausgewertet. Dieser Schlupf wird bei einer Auswertung berücksichtigt.

Des Weiteren ist die Auswerteeinheit 20 dazu vorgesehen, jeweils ein Drehmoment und eine Drehzahl der zwei Antriebsmotoren 12, 14 teilweise abhängig von der zumindest einen Kenngröße des Schlupfs zu regulieren. Die Auswerteeinheit 20 ist dazu jeweils über eine Leitung 44, 46 mit den Antriebsmotoren 12, 14 verbunden. Zwischen der Auswerteeinheit 20 und den Antriebsmotoren 12, 14 ist eine Motorsteuerung 48 angeordnet. Die Auswerteeinheit 20 und die Motorsteuerung 48 können jeweils über eine Regulierung der zugeführten Leistung der Antriebsmotoren 12, 14 ein Antriebsdrehmoment und eine Antriebsdrehzahl der Antriebsmotoren 12, 14 regulieren (Figur 2).

Das autonome Arbeitsgerät 10 weist drei Sensoreinheiten 22, 24, 26 auf, welche dazu vorgesehen sind, jeweils eine Kenngröße eines Schlupfs zu detektieren. Zwei Sensoreinheiten 22, 24 der drei Sensoreinheiten 22, 24, 26 sind jeweils von einem Drehzahlsensor 28, 30 gebildet. Die zwei Sensoreinheiten 22, 24 sind von einem magnetischen Drehzahlsensor 28, 30 gebildet. Die Drehzahlsensoren 28, 30 sind jeweils auf einer der zwei Wellen 36, 38, jeweils zwischen dem Getriebe 40, 42 und dem Antriebsmotor 12, 14 angeordnet. Die Drehzahlsensoren 28, 30 sind jeweils über eine Leitung 50, 52 mit der Auswerteeinheit 20 verbunden (Figur 2). Die Drehzahlsensoren 28, 30 weisen jeweils ein fest mit der jeweiligen Welle 36, 38 verbundenes, nicht weiter sichtbares Magnetpolrad und ein relativ zu dem Gehäuse 34 unbewegliches, nicht weiter sichtbares Sensorelement auf. Das nicht weiter sichtbare Sensorelement ist jeweils von einem Hall-Sensorelement gebildet. Über eine Änderung der Magnetfeldrichtung auf dem Magnetpolrad an einer Position des Sensorelements wird eine Drehzahl detektiert.

Die Sensoreinheit 26 der drei Sensoreinheiten 22, 24, 26 ist von einem Drehmomentsensor 32 gebildet. Der Drehmomentsensor 32 ist von einem Motorsensor gebildet. Der Drehmomentsensor 32 überwacht jeweils einen Motorstrom und eine Motorspannung der Antriebsmotoren 12, 14 sowie die von den Drehzahlsensoren 28, 30 detektierten Drehzahlen der Antriebsräder 16, 18. Über die überwachten Werte wird jeweils ein Drehmoment der Antriebsräder 16, 18 berechnet. Der Drehmomentsensor 32 ist innerhalb der Motorsteuerung 48 angeordnet.

Ferner ist die Auswerteeinheit 20 dazu vorgesehen, bei einem erhöhten Schlupf jeweils einen Betrag des Drehmoments der Antriebsmotoren 12, 14 zu reduzieren. Wird über die Drehzahlsensoren 28, 30 festgestellt, dass eines der Antriebsräder 16, 18 gegenüber dem anderen Antriebsrad 16, 18 eine erhöhte Drehzahl aufweist, wonach eine hohe Drehzahldifferenz vorliegt, wird diese Drehzahldifferenz mit einer Solldrehzahldifferenz verglichen, insbesondere da Differenzen durch Kurvenfahren entstehen. Ist diese Drehzahldifferenz auch gegenüber der Solldrehzahldifferenz um mehr als 30% erhöht, wird ein Antriebsdrehmoment des Antriebsmotors 12, 14 des entsprechenden Antriebsrads 16, 18 mit der erhöhten Drehzahl reduziert.

Wird über die Sensoreinheiten 22, 24, 26 eine abrupte Drehzahlerhöhung beider Antriebsräder 16, 18 bei einer Erniedrigung der Drehmomente festgestellt, wird diese Drehzahländerung mit einem vorliegenden Beschleunigungswert der Motorsteuerung 48 verglichen. Sind diese Werte verhältnismäßig um mehr als 30% different, wird eine Neigung des autonomen Arbeitsgeräts 10 überprüft. Befindet sich das autonome Arbeitsgerät 10 nicht auf einer Bergabfahrt, wird das Antriebsdrehmoment der beiden Antriebsmotoren 12, 14 reduziert.

Bei einem Bremsvorgang des autonomen Arbeitsgeräts 10 werden über die Sensoreinheiten 22, 24, 26 jeweils ein aktuelles Drehmoment und eine aktuelle Drehzahl der Antriebsräder 16, 18 detektiert. Über die aktuellen Drehzahlen der Antriebsräder 16, 18 werden über die Auswerteeinheit 20 Solldrehmomente der Antriebsräder 16, 18 berechnet. Stimmen die Solldrehmomente jeweils um mehr als 30% nicht mit dem aktuellen Drehmoment des jeweiligen Antriebsrads 16, 18 überein, wird das Drehmoment des entsprechenden Antriebsrad 16, 18 gegen das entsprechende Solldrehmoment reguliert.

Während eines Betriebs des autonomen Arbeitsgeräts 10 überwacht die Auswerteeinheit 20 über die Sensoreinheiten 22, 24 der Antriebsräder 16,18 jeweils ein Schlupfverhalten der Antriebsräder 16, 18. Wird das autonome Arbeitsgerät 10 über die Motorsteuerung 48 beschleunigt, erhöhen sich vorerst die Antriebsdrehmomente der Antriebsmotoren 12, 14 und damit auch die Drehmomente der Antriebsräder 16,18 und ein Radschlupf steigt an. Bei einem Radschlupf von ca. 10% bis 30% ergibt sich, je nach Untergrundbeschaffenheit, ein maximaler Kraftschlussbeiwert. Über die Sensoreinheiten 22, 24 werden dauerhaft die Drehzahlen der Antriebsräder 16, 18 detektiert und an die Auswerteeinheit 20 weitergeleitet (Figur 2).

Wird eine Differenz der Drehzahlen von über 30% festgestellt, wird von der Auswerteeinheit 20 eine aktuelle Lenkeinstellung der Motorsteuerung 48 überprüft. Liegt eine Lenkeinstellung vor, wird die dabei vorliegende Solldrehzahldifferenz der Motorsteuerung 48 mit der detektierten Drehzahldifferenz verglichen. Liegt eine Abweichung von über 30% vor, greift die Auswerteeinheit 20 aktiv in die Motorsteuerung 48 der Antriebsmotoren 12, 14 ein und reduziert das Antriebsdrehmoment des Antriebsmotors 12, 14, welcher das Antriebsrad 16, 18 mit der höheren Drehzahl antreibt, bis die Drehzahldifferenz um weniger als 30% von der Solldrehzahldifferenz abweicht.

Wird eine abrupte Erhöhung der Drehzahlen beider Antriebsräder 16, 18 bei einer Erniedrigung der Drehmomente festgestellt, wird diese Drehzahländerung mit einer aus dem vorliegenden Beschleunigungswert der Motorsteuerung 48 resultierenden Solldrehzahländerung verglichen. Sind die Werte um mehr als 30% different, wird eine Neigung des autonomen Arbeitsgeräts 10 überprüft. Weist das autonome Arbeitsgerät 10 in Fahrtrichtung eine Abwärtsneigung von weniger als 10° auf, greift die Auswerteeinheit 20 aktiv in die Motorsteuerung 48 der Antriebsmotoren 12, 14 ein. Die Auswerteeinheit 20 reduziert dabei das Antriebsdrehmoment beider Antriebsmotoren 12, 14 bis die Drehzahlen um weniger als 30% von Solldrehzahlen der Motorsteuerung 48 abweichen.

Wird über die Motorsteuerung 48 ein Bremsvorgang eingeleitet und der Antriebsmotor 12, 14 abgebremst, werden über die Sensoreinheiten 22, 24, 26 jeweils ein aktuelles Bremsmoment und eine aktuelle Drehzahl der Antriebsräder 16, 18 detektiert. Über die aktuellen Drehzahlen der Antriebsräder 16, 18 werden über die Auswerteeinheit 20 in regelmäßigen Intervallen Solldrehmomente der Antriebsräder 16, 18 berechnet. Stimmen die Solldrehmomente jeweils um mehr als 30% nicht mit dem aktuellen Drehmoment des jeweiligen Antriebsrads 16, 18 überein, wird das Drehmoment des entsprechenden Antriebsrads 16, 18 gegen das entsprechende Solldrehmoment reguliert, vorzugsweise reduziert.

## Patentansprüche

1. Autonomes Arbeitsgerät, insbesondere autonomer Rasenmäher, mit zumindest zwei Antriebsmotoren (12, 14), zumindest zwei Antriebsrädern (16, 18) und zumindest zwei Sensoreinheiten (22, 24, 26), welche dazu vorgesehen sind, jeweils eine Kenngröße eines Schlupfs der zwei Antriebsräder (16, 18) zu detektieren, sowie mit einer Auswerteeinheit (20), die dazu vorgesehen ist, zumindest die Kenngröße des Schlupfs der zumindest zwei Antriebsräder (16, 18) bei einer Auswertung zu berücksichtigen und mit einer Motorsteuerung (48) zur Regulierung eines Antriebsdrehmoments und/oder einer Antriebsdrehzahl der zumindest zwei Antriebsräder (16, 18), **dadurch gekennzeichnet, dass** die zumindest zwei Sensoreinheiten (22, 24, 26) jeweils von einem Drehzahlsensor (28, 30) gebildet sind, und die Auswerteeinheit (20) eine Drehzahldifferenz zwischen den zumindest zwei Antriebsrädern (16, 18) mit einer Solldrehzahldifferenz vergleicht, wobei die Motorsteuerung (48) das Antriebsdrehmoment des Antriebsmotors (12, 14) des entsprechenden Antriebsrads (16, 18) mit der erhöhten Drehzahl reduziert, wenn die Drehzahldifferenz gegenüber der Solldrehzahldifferenz um mehr als 30% erhöht ist.

2. Autonomes Arbeitsgerät nach Anspruch 1, **dadurch gekennzeichnet, dass** eine dritte Sensoreinheit (26) vorgesehen ist, die durch einen Drehmomentsensor (32) gebildet ist, der jeweils einen Motorstrom und eine Motorspannung der zumindest zwei Antriebsmotoren (12, 14) überwacht.

3. Autonomes Arbeitsgerät nach Anspruch 2, **dadurch gekennzeichnet, dass** im Falle einer detektierten abrupten Drehzahlerhöhung und einer Erniedrigung der Drehmomente beider Antriebsräder (16, 18) die Auswerteeinheit (20) die Drehzahländerung mit einem vorliegenden Beschleunigungswert der Motorsteuerung (48) vergleicht und bei einer Abweichung von mehr als 30% eine Neigung des autonomen Arbeitsgeräts (10) überprüft.

4. Autonomes Arbeitsgerät nach Anspruch 3, **dadurch gekennzeichnet, dass** die Motorsteuerung (48) das Antriebsdrehmoment beider Antriebsmotoren (12, 14) reduziert, wenn das autonome Arbeitsgerät (10) in Fahrtrichtung eine Abwärtsneigung von mehr als 10° aufweist.

5. Autonomes Arbeitsgerät nach einem der vorhergehenden Ansprüche, **dadurch gekennzeichnet, dass** bei einem Bremsvorgang die Sensoreinheiten (22, 24, 26) jeweils ein aktuelles Drehmoment und eine aktuelle Drehzahl der Antriebsräder (16, 18) detektieren, wobei die Auswerteeinheit (20) anhand der aktuellen Drehzahlen der Antriebsräder (16, 18) Solldrehmomente berechnet und die Motorsteuerung (48) das Antriebsdrehmoment des entsprechenden Antriebsrads (16, 18) gegen das ensprechende Solldrehmoment reguliert, wenn die Solldrehmomente jeweils um mehr als 30% nicht mit dem aktuellen Drehmoment des jeweiligen Antriebsrads (16, 18) übereinstimmt.

6. Autonomes Arbeitsgerät nach einem der vorhergehenden Ansprüche, **dadurch gekennzeichnet, dass** die Auswerteeinheit (20) eine aktuelle Lenkeinstellung der Motorsteuerung (48) überprüft, falls die Differenz der Drehzahlen beider Antriebsräder (16, 18) 30 % übersteigt, wobei die Auswerteeinheit (20) aktiv in die Motorsteuerung (48) derart eingreift, dass das Antriebsdrehmoment des Antriebsmotors (12, 14), welcher das Antriebsrad (16, 18) mit der höheren Drehzahl antreibt, reduziert wird, bis die Drehzahldifferenz um weniger als 30% von der Solldrehzahldifferenz abweicht.

7. Autonomes Arbeitsgerät nach einem der vorhergehenden Ansprüche, **dadurch gekennzeichnet, dass** die Auswerteeinheit (20) mittels der detektierten Drehzahlen der Antriebsräder (16, 18) in regelmäßigen Intervallen die Solldrehmomente der Antriebsräder (16, 18) berechnet.

## Claims

1. Autonomous implement, particularly an autonomous lawn mower, having at least two drive motors (12, 14), at least two drive wheels (16, 18) and at least two sensor units (22, 24, 26) that are provided for the purpose of detecting a respective characteristic quantity for a slippage of the two drive wheels (16, 18), and also having an evaluation unit (20) that is provided for the purpose of taking into consideration at least the characteristic quantity of the slippage of the at least two drive wheels (16, 18) for an evaluation and having a motor controller (48) for regulating a drive torque and/or a drive speed of the at least two drive wheels (16, 18), **characterized in that** the at least two sensor units (22, 24, 26) are each formed by a speed sensor (28, 30), and the evaluation unit (20) compares a speed difference between the at least two drive wheels (16, 18) with a setpoint speed difference, wherein the motor controller (48) reduces the drive torque of the drive motor (12, 14) of the applicable drive wheel (16, 18) having the increased speed when the speed difference exhibits an increase of more than 30% in comparison with the setpoint speed difference.

2. Autonomous implement according to Claim 1, **characterized in that** a third sensor unit (26) is provided that is formed by a torque sensor (32) that respectively monitors a motor current and a motor voltage for the at least two drive motors (12, 14).

3. Autonomous implement according to Claim 2, **characterized in that** in the event of an abrupt speed increase being detected and the torques of both drive wheels (16, 18) being lowered, the evaluation unit (20) compares the speed change with an available acceleration value for the motor controller (48) and, in the event of a discrepancy of more than 30%, checks an inclination of the autonomous implement (10).

4. Autonomous implement according to Claim 3, **characterized in that** the motor controller (48) reduces the drive torque of both drive motors (12, 14) when the autonomous implement (10) has a downward inclination of more than 10° in the direction of travel.

5. Autonomous implement according to one of the preceding claims, **characterized in that** a braking process prompts the sensor units (22, 24, 26) to respectively detect a present torque and a present speed of the drive wheels (16, 18), wherein the evaluation unit (20) uses the present speeds of the drive wheels (16, 18) to compute setpoint torques and the motor controller (48) regulates the drive torque of the applicable drive wheel (16, 18) towards the applicable setpoint torque when the setpoint torques each fail to match the present torque of the respective drive wheel (16, 18) by more than 30°.

6. Autonomous implement according to one of the preceding claims, **characterized in that** the evaluation unit (20) checks a present steering setting of the motor controller (48) if the difference between the speeds of both drive wheels (16, 18) exceeds 30%, wherein the evaluation unit (20) actively takes action in the motor controller (48) such that the drive torque of the drive motor (12, 14) that drives the drive wheel (16, 18) having the higher speed is reduced until the speed difference differs from the setpoint speed difference by less than 30%.

7. Autonomous implement according to one of the preceding claims, **characterized in that** the evaluation unit (20) uses the detected speeds of the drive wheels (16, 18) to compute the setpoint torques of the drive wheels (16, 18) at regular intervals.

## Revendications

1. Outil de travail autonome, en particulier tondeuse à gazon autonome, doté d'au moins deux moteurs d'entraînement (12, 14), d'au moins deux roues motrices (16, 18) et d'au moins deux unités de capteur (22, 24, 26), qui sont prévues pour détecter respectivement une grandeur caractéristique d'un patinage des deux roues motrices (16, 18), ainsi que d'une unité d'exploitation (20), qui est prévue pour tenir compte de la grandeur caractéristique du patinage desdites au moins deux roues motrices (16, 18) lors d'une évaluation et d'une commande de moteurs (48) pour la régulation d'un couple de rotation d'entraînement et/ou d'une vitesse de rotation d'entraînement desdites au moins deux roues motrices (16, 18), **caractérisé en ce que** lesdites au moins deux unités de capteur (22, 24, 26) sont respectivement formées par un détecteur de vitesse de rotation (28, 30), et l'unité d'exploitation (20) compare une différence de vitesse de rotation entre lesdites au moins deux roues motrices (16, 18) avec une différence de vitesse de rotation de consigne, dans lequel la commande de moteurs (48) réduit le couple de rotation d'entraînement du moteur d'entraînement (12, 14) de la roue motrice correspondante (16, 18) présentant la vitesse de rotation accrue, lorsque la différence de vitesse de rotation est augmentée de plus de 30 % par rapport à la différence de vitesse de rotation de consigne.

2. Outil de travail autonome selon la revendication 1, **caractérisé en ce qu'**il est prévu une troisième unité de capteur (26), qui est formée par un capteur de couple de rotation (32), qui surveille respectivement un courant de moteur et une tension de moteur desdits au moins deux moteurs d'entraînement (12, 14).

3. Outil de travail autonome selon la revendication 2, **caractérisé en ce que**, dans le cas d'une brusque augmentation de vitesse de rotation détectée et d'une baisse des couples de rotation des deux roues motrices (16, 18), l'unité d'exploitation (20) compare la variation de vitesse de rotation avec une valeur d'accélération existante de la commande de moteurs (48) et, dans le cas d'un écart de plus de 30 %, vérifie une inclinaison de l'outil de travail autonome (10).

4. Outil de travail autonome selon la revendication 3, **caractérisé en ce que** la commande de moteurs (48) réduit le couple de rotation d'entraînement des deux moteurs d'entraînement (12, 14), lorsque l'outil de travail autonome (10) présente dans la direction de marche une inclinaison vers le bas de plus de 10 °.

5. Outil de travail autonome selon l'une quelconque des revendications précédentes, **caractérisé en ce que** les unités de capteur (22, 24, 26) détectent lors d'une opération de freinage respectivement un couple de rotation actuel et une vitesse de rotation actuelle des roues motrices (16, 18), dans lequel l'unité d'exploitation (20) calcule des couples de rotation de consigne à l'aide des vitesses de rotation actuelles des roues motrices (16, 18) et la commande de moteurs (48) régule le couple de rotation d'entraînement de la roue motrice correspondante (16, 18) par rapport au couple de rotation de consigne correspondant, lorsque les couples de rotation de consigne s'écartent chacun de plus de 30 % du couple de rotation actuel de la roue motrice respective (16, 18).

6. Outil de travail autonome selon l'une quelconque des revendications précédentes, **caractérisé en ce que** l'unité d'exploitation (20) vérifie une position de direction actuelle de la commande de moteurs (48), dans le cas où la différence des vitesses de rotation des deux roues motrices (16, 18) dépasse 30 %, dans lequel l'unité d'exploitation (20) intervient activement dans la commande de moteurs (48), de telle manière que le couple de rotation d'entraînement du moteur d'entraînement (12, 14), qui entraîne la roue motrice (16, 18) présentant la plus haute vitesse de rotation, soit réduit jusqu'à ce que la différence de vitesse de rotation s'écarte de moins de 30 % de la différence de vitesse de rotation de consigne.

7. Outil de travail autonome selon l'une quelconque des revendications précédentes, **caractérisé en ce que** l'unité d'exploitation (20) calcule à intervalles réguliers, au moyen des vitesses de rotation détectées des roues motrices (16, 18), les couples de rotation de consigne des roues motrices (16, 18).
